**Europäisches Patentamt**

**European Patent Office**

**Office européen des brevets**

(19)

(11) Veröffentlichungsnummer: **0 133 305**
**B1**

(12) # EUROPÄISCHE PATENTSCHRIFT

(45) Veröffentlichungstag der Patentschrift:
01.07.87

(21) Anmeldenummer: **84108910.5**

(22) Anmeldetag: **27.07.84**

(51) Int. Cl.⁴: **B 26 D 7/06,** A 01 J 27/04,
**B 26 D 1/20**

(54) **Vorrichtung zum Zuführen von stangenförmigem Stückgut.**

(30) Priorität: **01.08.83 DE 3327747**

(43) Veröffentlichungstag der Anmeldung:
**20.02.85 Patentblatt 85/8**

(45) Bekanntmachung des Hinweises auf die Patenterteilung:
**01.07.87 Patentblatt 87/27**

(84) Benannte Vertragsstaaten:
**AT CH FR GB IT LI NL SE**

(56) Entgegenhaltungen:
**CH-A-571 939**
**DE-A-3 241 374**
**DE-C-974 351**
**US-A-906 220**
**US-A-1 939 741**

(73) Patentinhaber: **ALPMA Alpenland Maschinenbau
Hain & Co. KG, D-8093 Rott am Inn (DE)**

(72) Erfinder: **Hain, Gottfried, Dipl.- Ing., Lehen 53,
D-8091 Ramerberg (DE)**
Erfinder: **Krebs, Karl- Heinz, Pfälzerstrasse 46,
D-8201 Grosskarolinenfeld (DE)**

(74) Vertreter: **Hain, Leonhard, Dipl.- Ing., Tal 18/IV,
D-8000 München 2 (DE)**

LIBER, STOCKHOLM 1987

**Beschreibung**

Die Erfindung betrifft eine Vorrichtung zum Zuführen von stangenförmigem Stückgut, wie Würsten, gepressten Fleischwaren, Stangenbrot, Teig- und Zuckersträngen, Käsestangen usw., zu einem Schneidwerkzeug gemäß dem Oberbegriff des Patentanspruches 1.

Bei einer Schneidvorrichtung für Käsestangen gemäß der CH-A-571 939 werden die zu schneidenden Käsestangen mittels angetriebener Transportbänder einem umlaufenden Kreismesser zugeführt. Zwischen dem Ende der Transportbahn und dem Schneidwerkzeug ist eine feststehende Gleitfläche vorgesehen, deren freies Ende als Gegenschneidkante ausgebildet ist. Die Transportbahn ist seitlich von vertikal hochstehenden Schachtwänden begrenzt. In einer sind freilaufende Rollensätze eingebaut, an denen die Käsestangen während ihres Vorschubes anliegen. Da die um Umlenkrollen umlaufenden Transportbänder in einem merklichen Abstand vom Schneidwerkzeug enden müssen, entsteht entlang der feststehenden Gleitfläche ein Bereich, in dem auf die Käsestangen keine Vorschubkraft mehr übertragen werden kann. Gelangt schließlich ein Stangenende in diesen Bereich, dann wird dieses noch nicht geschnittene Reststück nicht mehr vorgeschoben, so daß es ungeschnitten bleibt. Außerdem läßt mit fortschreitendem Vorschub zwischen den Transportbändern und dem Käsestück die Reibungskraft nach, wodurch die Rutschgefahr und damit auch die Ungleichmäßigkeit des Vorschubes der Käsestangen merklich erhöht werden. Bei einer anderen Schneidmaschine für Wurst od. dgl. gemäß der DE-A-3 241 374 ist zum Transport jeder Wurststange eine Mitnehmerwalze mit einem schraubenförmig verlaufenden Kamm vorgesehen. Damit die auf dieser Vorschubwalze aufliegende Wurst sich nicht frei mitdrehen kann, sind zur Verstärkung des Aufliegedruckes und damit einer Vorschubkraft auf die Wurst von oben auf diese aufdrückbare Druckstücke vorgesehen. Mit einer solchen Zuführvorrichtung lassen sich aber empfindliche und weiche Güter, wie Käse, Brot, Teigstränge od. dgl., nicht ohne Beschädigung der Stangenform und Störung im Vorschub transportieren. Da die Vorschubwalzen in stirnseitig angeordneten Lagern abgestützt sind, enden auch diese Vorschuborgane in einem Abstand vor der Gegenschneidkante, weshalb auch mit dieser Vorrichtung die Stangenenden nicht ausreichend dicht an das Schneidwerkzeug herangeführt werden, um auch den Stangenrest noch in Scheiben schneiden zu können.

Der Erfindung liegt daher die Aufgabe zugrunde, eine Vorrichtung zum Zuführen von stangenförmigem Stückgut zu einem Schneidwerkzeug zu schaffen, die ein dichtes und kontrolliertes Heranführen auch kleinster Stangenreste an das Schneidwerkzeug gewährleistet.

Diese Aufgabe wird an einer Zuführvorrichtung gemäß dem Oberbegriff des Patentanspruches 1 durch die kennzeichnenden Merkmale dieses Patentanspruches gelöst.

Durch die erfindungsgemäße Anordnung von Vorschubwalzen beiderseits der zu transportierenden Gutstangen ist es möglich, die Stangen unter Beibehaltung einer bestimmten Vorschubgeschwindigkeit dem Schneidwerkzeug sicher zuzuführen und dabei auch jedes Endstück unter Kontrolle und Zwangsführung so dicht an das Schneidwerkzeug heranzuführen, daß noch die letzte mögliche Scheibe davon in gleicher Dicke abgeschnitten werden kann.

Eine bevorzugte Weiterentwicklung dieser Vorrichtung sieht das Zuführen unterschiedlich breiter Stangen vor, wobei eine selbständige Einstellung der Vorschubwerkzeuge auf unterschiedlich breite Stangen ermöglicht und dadurch Unregelmäßigkeiten im Vorschub und in der Schnittstärke verhindert werden.

Vorteilhafte Verbesserungen sind in weiteren Unteransprüchen beansprucht.

Die Erfindung wird nachfolgend anhand von Ausführungsbeispielen, die auch in der Zeichnung schematisiert dargestellt sind, näher beschrieben. Es zeigen:

Fig. 1 eine perspektivische Ansicht einer ersten Vorrichtung,

Fig. 2 eine perspektivische Ansicht einer zweiten Vorrichtung und

Fig. 3 eine Ansicht einer gekürzten Vorschubwalze, vergrößert.

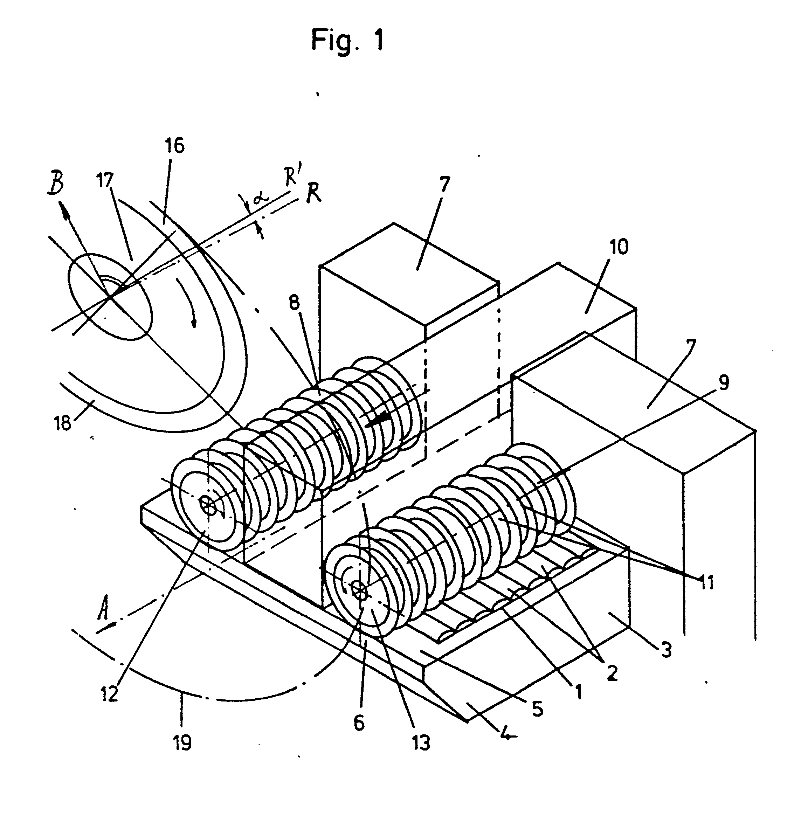

Die in Fig. 1 dargestellte Zuführvorrichtung weist eine frei auskragende Rollenbahn 1 auf, deren nur teilweise sichtbare Rollen 2 in Lagerwänden 3 gelagert sind. Diese Rollenbahn wird am Ende von einer mit der Rollenbahn ebenengleichen Gleitfläche 5 eines Abschlußstückes 4, an dem auch eine Gegenschneidkante 6 ausgebildet ist, begrenzt. An von beiden Seiten in die Rollenbahn hineinragenden Lagerkonsolen 7 sind je eine Vorschubwalze 8 bzw. 9, im Ausführungsbeispiel in fliegender Anordnung, gelagert. Diese Vorschubwalzen sind mit Gewinde- od.dgl. Haftgängen 11 versehen, so daß die beispielsweise im Uhrzeigersinn umlaufende Walze 8 und die im Gegensinn umlaufende Walze 9 eine dazwischen befindliche Käsestange 10 zwangsweise auf der Rollenbahn zur Gegenschneidkante 6 vorschieben. Die Vorschubwalzen 8, 9 reichen mit ihren planen Stirnflächen 12, 13 bis zur Gegenschneidkante, und da auch die Gewindegänge sich bis zu diesen Stirnflächen erstrecken, wird auch noch auf das hinterste Ende eines Stangen-Reststückes eine Vorschubbewegung ausgeübt, so daß auch jede letztmögliche Scheibe von diesem Endstück in vorbestimmter Dicke abgeschnitten werden kann. Im Ausführungsbeispiel besteht das Schneidwerkzeug 16 aus einem rotierenden Scheibenmesser 17, dessen Schneidkante 18 sich entlang eines Schneidkreises 19 an der Gegenschneidkante vorbeibewegt.

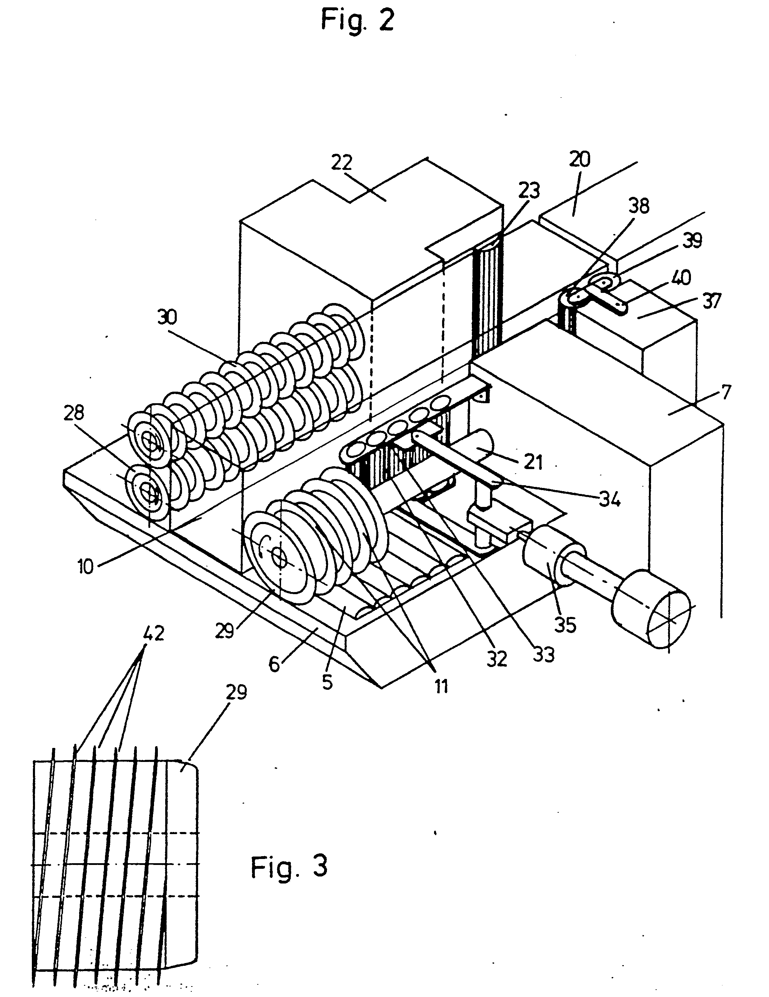

In Fig. 2 ist eine weiterentwickelte Zuführvorrichtung gezeigt, die insbesondere für unterschiedlich breite Käsestangen 10 bzw. 20 geeignet ist. Als Zuführauflage dient wiederum eine Rollenbahn 1 mit ihrer vorderen Gleitfläche 5 und Gegenschneidkante 6 wie im Ausfürungsbeispiel gemäß Fig. 1. An der Lagerkonsole 7 ist in diesem Fall mittels einer Welle 21 nur eine verhältnismäßig kurze, jedoch ebenfalls an der Gegenschneidkante 6 endende Vorschubwalze 29 gelagert, die lediglich zwei oder drei Gewindegänge 11 an ihrem freien Ende aufweist. Auf der anderen Seite sind an einer erweiterten Lagerkonsole 22 übereinander gelagerte Vorschubwalzen 28, 30 angetrieben, die von kleinerem Durchmesser sind und auf die Käsestange 10 folglich entlang zweier Angriffsebenen einwirken. Die kurze Vorschubwalze 29 erfaßt hingegen die Stange jeweils nur kurz vor der Schneidstelle. Während die Vorschubwalzen 28, 30 in feststehenden Rotationslagern gelagert sind, ist die Welle 21 der Vorschubwalze 29 seitlich verschiebbar, um der Vorschubwalze 29 die Möglichkeit zur Anpassung an abweichende Stangenbreiten zu geben. Zur Überleitung auf die kürzere Vorschubwalze 29 dient eine Andrück-Rollenwand 32 mit vertikal gelagerten freilaufenden Rollen 33, welche mit ihrem einen Ende gelenkig an der Lagerkonsole 7 befestigt ist. Über ein Gestänge 34 greift ein Stellorgan, beispielsweise ein hydraulischer oder pneumatischer Druckzylinder 35, an der Rollenwand 32 an. Dazu ist der Druckzylinder dauernd mit einem der Konsistenz der Käsestange entsprechenden Druck beaufschlagt und drückt die Rollenwand 32 gegen die Käsestange, die dadurch in die Gewindegänge der Vorschubwalzen 28, 30 gedrückt wird. Gleichzeitig wird auch die kurze Vorschubwalze mit der Käsestange in Eingriff gehalten, was in einfacher Weise mittels eines weiteren Druckzylinders (nicht gezeichnet) geschieht. Die Lagerkonsole 7 und damit die Welle 21 der Vorschubwalze 29 ruhen auf einer in seitlicher Richtung wirkenden Gleitführung (nicht sichtbar), auf der die Lagerkonsole eine Seitenbewegung von ca. 20-40 mm ausführen kann. Diese Gleitführung befindet sich auf einem Supportschlitten, der mit einer gemeinsamen Rechts-/Linksgewindespindel mit dem Gegensupport der Vorschubwalzen 28, 30 auf die Formatbreite eingestellt wird. Zur Steuerung des Zulaufes der Stangen an der Einlaufseite befindet sich an der Lagerkonsole 22 in einem Abstand von der Schneidstelle, der einer Stangenlänge entspricht, eine um eine Vertikalachse drehende Förderwalze 23 mit gerändelter Oberfläche. Dieser angetriebenen Förderwalze gegenüber ist ein Steuergerät 37 mit seinen Gegendrückrollen 38, 39 angeordnet, die, auf einer Wippe 40 gelagert, die ankommenden Stangen 20 abfühlen. In der Ausgangsstellung ist die vordere Rolle 38 mehr nach innen ausgestellt. Folgt einer dünneren Stange eine dickere, dann wird die Gegendrückrolle 38 zurückgedrückf und dabei ein Schalter des Steuergerätes betätigt. Daraufhin bleibt die Förderwalze 23 stehen, wodurch die nachgeschobene Stange 20 angehalten wird, und zwar so lange, bis zwischen der vorhergehenden Stange 10 und ihr ein Abstand vorhanden ist, der mindestens der Länge der kurzen Vorschubwalze 29 entspricht. Diese Vorschubwalze muß jedes Stangen-Endstück restlos dem Schneidwerkzeug zugeführt haben, bevor sie auf eine breitere Stange eingestellt werden darf. Folgt einer dicken Stange 20 eine dünnere, dann läßt die Förderwalze 23 diese Stange ohne Unterbrechung und abstandsfrei nachlaufen. Nach dem vollständigen Aufschneiden der dickeren Stange stellt sich dann die Vorschubwalze 29 auf die dünnere Stange ein und führt letztere wiederum bis zum letzten Schnitt zu. Dabei ist es nicht schädlich, wenn die unmittelbar nachlaufende dünnere Stange am Vorderende eine kurze Zeit ohne Eingriff der Vorschubwalze 29 ist, weil diese Führungslücke von der Andrück-Rollenwand 32 überbrückt wird.

Die vorbeschriebene Einrichtung macht es also möglich, die Stangentoleranzen abzutasten und die Stangen unabhängig von ihrer Breite in einem fortlaufenden Arbeitsgang zu schneiden, und zwar bis zu einer Scheibendicke unter 1 mm. Die hierbei bei breiteren Stangen auftretenden Abstandslücken fallen nicht ins Gewicht; denn dieser Abstand entspricht lediglich der Länge der kürzeren Vorschubwalze 29, die verhältnismäßig kurz sein kann. Jedenfalls wird die gestellte Aufgabe, die Stangen unabhängig von ihrer Breite restlos dem Schneidwerkzeug zuzuführen, erfüllt.

In Fig. 3 ist eine Vorschubwalze, beispielsweise die verkürzte Walze 29, dargestellt. Dabei sind die Gewindegänge von scharfkantigen Gewindestegen 42 gebildet, die 1-4 mm vorstehen und sich fest in die Stangenflanken eingraben, ohne schädliche Spuren zu hinterlassen.

Damit beim Schneidvorgang durch die Krafteinwirkung des Scheibenmessers 17 auf die Käsestange keine unkontrollierten Seitenbewegungen übertragen werden können, ist dem Seiten-Druckzylinder der Vorschubwalze 29 ein Kurzhubzylinder (nicht gezeichnet) zugeordnet, der von einer Messer-Exzenterantriebsrolle so gesteuert wird, daß er während des Schneidvorganges über einen Bremsklotz auf die Seitenführung der Lagerkonsole 7 wirkt und diese samt dem Vorschubzylinder gegen eine seitliche Bewegung blockiert.

Um zu vermeiden, daß bei einem kontinuierlichen Vorschub des stangenförmigen Stückgutes 10 die Messerfläche des dicht an der Gegenschneidkante 6 vorbeiziehenden Schneidwerkzeuges den Stückgutvorschub durch Aufstauen behindert, ist das Messer zweckmäßig auf einer um einen vorbestimmten Anstellwinkel gegenüber der Stückgut-Vorschubachse geneigten Messer-Bewegungsachse gelagert.

Durch diese Messerschrägstellung greift nur die wirksame Schneidkante des Schneidwerkzeuges am Stückgut an, um das jeweilige Frontstück abzuschneiden, während die schräggestellte Messerfläche selbst so weit von der Schnittfläche des Stückgutes abgesetzt ist, daß das Stückgut ohne Behinderung auch während eines Schneidvorganges kontinuierlich nachgeschoben werden kann. Besonders vorteilhaft ist die Anstellung eines rotierenden Scheibenmessers 17, das bei jedem Umlauf entlang des Schneidkreises 19 eine Frontscheibe vom Stückgut 10 abschneidet. Durchquert dieses Scheibenmesser das Stückgut etwa in Diagonalrichtung, so liegt auch der Anstellwinkel $\alpha$ in dieser hierzu sich erstreckenden Ebene, die sich aus der zur Vorschubachse A (Fig. 1) parallelen Rotationsachse R und dem der Schneidbewegung des Scheibenmessers entsprechenden Bewegungsvektor B ergibt. Die um den Anstellwinkel $\alpha$ verstellte wirkliche Rotationsachse ist mit R' bezeichnet. Der Achsen-Anstellwinkel $\alpha$ ist im wesentlichen von der Dicke der abzuschneidenden Scheiben und auch von der Vorschubgeschwindigkeit abhängig.

Die Erfindung beschränkt sich nicht auf die gezeigten Ausführungsbeispiele. Die Rollenbahn könnte auch ein Umlaufband sein. Anstelle einer einseitigen Lagerung der Vorschubwalzen ist auch eine doppelseitige möglich, wenn das zweite Lager nicht an der Stirnseite 12 bzw. 13 vorgesehen ist. Der Wippen-Steuerschalter kann auch von jedem geeigneten Tastfühler ersetzt sein, wie auch die Breiteneinstellung der Vorschubwalze 29 außer von Hand auch automatisch vom Druckzylinder 35, entweder von der Andrück-Rollenwand 32 oder vom Steuergerät 37 gesteuert, erfolgen kann. Schließlich können auch eine oder beide der Vorschubwalzen 8, 9 bei der Vorrichtung nach Fig. 1 seitenverschiebbar gelagert sein. Die Verschiebung kann entgegen Federdruck erfolgen, wobei durch vorgeschaltete Auflauf-Schrägwände (nicht dargestellt) die notwendige Rückverstellung der einen oder der beiden Walzen erreicht werden kann. Ist keine der Vorschubwalzen verkürzt, dann kann der Nachschub nur unter Einhaltung entsprechender Abstandslücken ausgeführt werden. Die Zuführung der Stangen zur erfindungsgemäßen Vorrichtung ist auf verschiedene Weise möglich, z. B. durch eine schiefe Rollenbahn, durch angetriebene Transportmittel oder auch durch Einlegen von Hand.

Die Anstellung des Schneidwerkzeuges gegenüber der Parallelen zur Vorschubachse ist nicht nur für umlaufende Scheibenmesser von Vorteil, sondern ebenfalls für geradlinig sich bewegende Scheiben- oder Klingenmesser.

**Patentansprüche**

1. Vorrichtung zum Zuführen von stangenförmigem Stückgut, wie Würsten, gepressten Fleischwaren, Stangenbrot, Teig- und Zuckersträngen, Käsestangen usw., zu einem Schneidwerkzeug, mit einer Rollenbahn (1) als Unterlage für die Stangen (10), mit Vorschubeinrichtungen zum schrittweisen oder kontinuierlichen Transport der Stangen zum am Ende der Rollenbahn angeordneten Schneidwerkzeug und mit einer am freien Ende der Rollenbahn (1) vorgesehenen feststehenden Gleitfläche (5), deren freie Stirnkante als Gegenschneidkante (6) ausgebildet ist, dadurch gekennzeichnet, daß als Vorschubeinrichtungen mit Gewindegängen (11) ausgestattete Vorschubwalzen (8, 9 bzw. 28, 29, 30) zum beiderseitigen Eingriff an der zu schneidenden Stange (10, 20) vorgesehen sind und diese Vorschubwalzen plane, dicht an der Gegenschneidkante (6) endende Stirnflächen (12, 13), in die auch die Gewindegänge auslaufen, aufweisen.

2. Zuführvorrichtung nach Anspruch 1, dadurch gekennzeichnet, daß die Vorschubwalzen (8, 9, 28, 29, 30) fliegend gelagert sind.

3. Zuführvorrichtung nach Anspruch 1 oder 2, dadurch gekennzeichnet, daß auf einer oder beiden Seiten zwei oder mehr übereinander gelagerte Vorschubwalzen (28, 30) vorgesehen sind.

4. Zuführvorrichtung nach einem der Ansprüche 1 bis 3, dadurch gekennzeichnet, daß mindestens die Vorschubwalzen der einen Seite im Abstand gegenüber den Vorschubwalzen der anderen Seite verstellbar sind.

5. Zuführvorrichtung nach einem der Ansprüche 1 bis 4, dadurch gekennzeichnet, daß die Vorschubwalze (29) der einen Seite in ihrer Länge auf nur wenige Gewindegänge (11) verkürzt ist.

6. Zuführvorrichtung nach Anspruch 5, dadurch gekennzeichnet, daß der verkürzten Vorschubwalze (29) eine verstellbare Andrück-Rollenwand (32) zugeordnet ist.

7. Zuführvorrichtung nach einem der Ansprüche 4 bis 6, dadurch gekennzeichnet, daß ein Steuergerät (37) zum zeitweiligen Anhalten jeder nachfolgenden, gegenüber der vorhergehenden breiteren Stange (20) vorgesehen ist, das die angehaltene Stange (20) erst dann freigibt, wenn der Abstand zur vorhergehenden Stange (10) die Länge der seitenbeweglichen und gegebenenfalls gekürzten Vorschubwalze (29) überschritten hat.

8. Zuführvorrichtung nach Anspruch 7, dadurch gekennzeichnet, daß das Steuergerät (37) mit auf einer Wippe (40) gelagerten Gegendruckrollen (38, 39) zum Abtasten der Stangenbreite ausgerüstet ist, und daß diesen Gegendruckrollen gegenüber eine Förderwalze (23) angeordnet ist, die vom Steuergerät aus ingangsetzbar oder anhaltbar ist.

9. Zuführvorrichtung nach einem der Ansprüche 1 bis 8, dadurch gekennzeichnet, daß die Gewindegänge (11) der Vorschubwalzen von scharfkantigen Gewindestegen (42) gebildet sind.

10. Zuführvorrichtung nach einem der Ansprüche 1 bis 9, dadurch gekennzeichnet, daß als Schneidwerkzeug ein rotierendes Scheibenmesser (17), das sich entlang eines Schneidkreises (19) an der Gegenschneidkante (6) vorbeibewegt, vorgesehen ist.

11. Zuführvorrichtung nach Anspruch 10, dadurch gekennzeichnet, daß das Scheibenmesser (17) mit seiner wirklichen Schneidachse R' gegenüber einer zur Stückgut-Vorschubachse A parallelen Schneidachse R um einen vorbestimmten Anstellwinkel α so geneigt ist, daß nur die wirksame Schneidkante des Schneidwerkzeuges mit der Gegenschneidkante (6) in Kontakt tritt.

## Claims

1. Device for feeding bar-shaped articles, such as sausages, pressed meat, bar-shaped loaves of bread, rolls of dough and sugar, cheese bars and the like to a cutting tool, the device having a roller conveyor (1) serving as support for the bars (10), feed members for a step-wise or continuous conveyance of the bars to the cutting tool which is provided at the end of the roller conveyor, and a stationary sliding surface (5) which is situated at the free end of the roller conveyor (1) and whose free frontal edge is formed as a counter-cutting edge (6), characterized in that the feed members are feeding cylinders (8, 9 or 28, 29, 30) being provided with threads (11) for engaging in both sides of the bar (10, 20) to be cut and that said feeding cylinders have plane frontal surfaces (12, 13) ending closely near the counter-cutting edge (6), the threads ending in said frontal surfaces.

2. Feeding device according to claim 1, characterized in that the feeding cylinders (8, 9, 28, 29, 30) are in overhung position.

3. Feeding device according to claim 1 or 2, characterized in that at one or both sides two or more superposed feeding cylinders (28, 30) are provided.

4. Feeding device according to one of the claims 1 to 3, characterized in that at least the feeding cylinders of the one side are adjustable towards the feeding cylinders of the other side in order to alter the distance between them.

5. Feeding device according to one of the claims 1 to 4, characterized in that the length of the feeding cylinder (29) of the one side is shortened to only a few threads (11).

6. Feeding device according to claim 5, characterized in that an adjustable pressure plate (32) formed of rolls is related to the shortened feeding cylinder (29).

7. Feeding device according to one of the claims 4 to 6, characterized in that for temporarily stopping each succeeding bar (20) which is wider than the preceding one a control unit (37) is provided which releases the bar (20) that had been stopped only when the distance to the preceding bar (10) exceeds the length of the laterally movable and, if necessary, shortened feeding cylinder (29).

8. Feeding device according to claim 7, characterized in that the control unit (37) has counter-pressure rolls (38, 39) which are mounted on a yoke (40) and serve for tracing the width of the bar and that opposite said counter-pressure rolls a conveyor roller (23) is situated which can be started or stopped by the control unit.

9. Feeding device according to one of the claims 1 to 8, characterized in that the threads (11) of the feeding cylinders are formed by sharp-cornered thread webs (42).

10. Feeding device according to one of the claims 1 to 9, characterized in that the cutting tool is a rotating disc blade (17) passing the counter-cutting edge (6) along a circle of cutting (19).

11. Feeding device according to claim 10, characterized in that the real axis of cutting R' of the disc blade (17) inclines towards the axis of cutting R which is parallel to the axis of feed A by a predetermined angle of incidence α in such a way that only the active cutting edge of the cutting tool comes in contact with the counter-cutting edge (6).

## Revendications

1. Dispositif d'amenée de produits en forme de barres, tels que des saucisses, de la charcuterie comprimée, des baguettes, des rouleaux de pâte et des boudins de sucre, des barres de fromage, etc, à un outil de coupe, et comportant une voie de roulement (1) constituant un dispositif de soutien pour les barres (10), des dispositifs d'avance permettant l'entraînement pas-à-pas ou continu des barres jusqu'à l'outil de coupe disposé à l'extrémité de la voie de roulement, et une surface fixe de glissement (5), prévue sur l'extrémité libre de la voie de roulement (1) et dont le bord frontal libre est réalisé sous la forme d'une arête de coupe antagoniste (6), caractérisé en ce qu'il est prévu, comme dispositifs d'avance, des cylindres d'avance (8, 9 ou 28, 29, 30) équipés de spires de filetage (11) et destinés à contacter, des deux côtés, la barre (10, 20) devant être découpée, et que ces cylindres d'avance comportent des surfaces frontales planes (12, 13), qui se terminent à proximité directe de l'arête de coupe antagoniste (6) et au niveau desquelles les spires de filetage se terminent également.

2. Dispositif d'amenée selon la revendication 1, caractérisé en ce que les cylindres d'avance (8, 9, 28, 29, 30) sont montés en porte-à-faux.

3. Dispositif d'amenée selon la revendication 1 ou 2, caractérisé en ce que deux ou plusieurs cylindres d'avance superposés (28, 30) sont prévus d'un côté ou sur les deux côtés.

4. Dispositif d'amenée selon l'une quelconque des revendications 1 à 3, caractérisé en ce que la distance au moins des cylindres d'avance situés d'un côté par rapport au cylindre d'avance situé de l'autre côté est réglable.

5. Dispositif d'amenée selon l'une quelconque des revendications 1 à 4, caractérisé en ce que la longueur du cylindre d'avance (29) situé d'un côté est réduite à seulement quelques spires de filetage (11).

6. Dispositif d'amenée selon la revendication 5 caractérisé en ce qu'une paroi réglable (32) formée de rouleaux de pression est associée au cylindre d'avance raccourci (29).

7. Dispositif d'amenée selon l'une quelconque des revencications 4 à 6, caractérisé en ce qu'il est prévu un appareil de commande (37) servant à retenir temporairement chaque barre ultérieure (20) plus large que la précédente, et qui ne libère la barre (20) retenue que lorsque la distance par rapport à la barre précédente (10) a dépassé la longueur du cylindre d'avance (29) déplaçable latéralement et éventuellement raccourci.

8. Dispositif d'amenée selon la revendication 7, caractérisé en ce que l'appareil de commande (37) est équipé de rouleaux de contre-pression (38, 39) montés sur un baladeur (40) et servant à explorer la largeur de la barre, et en ce que ces rouleaux de contre-pression sont disposés en vis-à-vis d'un rouleau d'entraînement (23), qui peut être mis en marche ou arrêté à partir de l'appareil de commande.

9. Dispositif d'amenée selon l'une quelconque des revendications 1 à 8, caractérisé en ce que les spires de filetage (11) du cylindre d'avance sont formées par des nervures (42) constituant un filetage à arête vive.

10. Dispositif d'amenée selon l'une quelconque des revendications 1 à 9, caractérisé en ce qu'il est prévu comme outil de coupe un couteau circulaire rotatif (17), qui se déplace devant l'arête de coupe antagoniste (6), le long d'un cercle de coupe (19).

11. Dispositif d'amenée selon la revendication 10, cactérisé en ce que l'axe réel de coupe (R') du couteau (17) est incliné par rapport à l'axe de coupe (R) parallèle à l'axe d'avance (A), d'un angle d'inclinaison prédéterminé α de sorte que seule l'arête de coupe active de l'outil de coupe entre en contact avec l'arête de coupe antagoniste (6).

# Fig. 1

## Fig. 2

## Fig. 3